Europäisches Patentamt

European Patent Office

Office européen des brevets

(11) Numéro de publication : **0 055 240**
**B1**

## FASCICULE DE BREVET EUROPÉEN

(45) Date de publication du fascicule du brevet :
28.11.84

(51) Int. Cl.³ : **C 09 D   7/12, C 09 D   5/08**

(21) Numéro de dépôt : **81870027.0**

(22) Date de dépôt : **03.06.81**

(54) Procédé de désoxygénation de compositions servant de revêtement protecteur, en particulier des peintures, compositions à cet effet et leurs applications.

(30) Priorité : **22.12.80 BE 110085**

(43) Date de publication de la demande :
**30.06.82 Bulletin 82/26**

(45) Mention de la délivrance du brevet :
**28.11.84 Bulletin 84/48**

(84) Etats contractants désignés :
**AT BE CH DE FR GB IT LI LU NL SE**

(56) Documents cités :
**DE-A- 1 644 737**
**FR-A- 1 460 551**
**US-A- 3 005 714**
**US-A- 4 045 393**

(73) Titulaire : **Association sans but lucratif CoRI
(Coatings Research Institute)
Square Marie-Louise, 49
B-1040 Bruxelles (BE)**

(72) Inventeur : **Janssen Bennynck, Fernand Pierre
16, avenue Général Dubois
B-1338 Lasne (BE)**
Inventeur : **Piens, Marcel
46, rue Semal
B-1310 La Hulpe (BE)**

(74) Mandataire : **Van Malderen, Michel et al
p.a. Freylinger & Associés 22 avenue J.S. Bach (bte 43)
B-1080 Bruxelles (BE)**

Jouve, 18, rue St-Denis, 75001 Paris, France

## Description

La présente invention concerne un procédé de désoxygénation des compositions servant de revêtement protecteur, en particulier des peintures mais également des enduits et des vernis. L'invention s'étend aux compositions destinées à la mise en pratique du procédé et aux applications de celles-ci.

L'action de l'oxygène dans des milieux tels que des revêtements de protection de surfaces comme les peintures, les enduits et les vernis, sous forme liquide ou sous forme de films formés (feuils) entraîne un grand nombre d'inconvénients bien connus des praticiens.

C'est ainsi que l'on remarque sous l'effet de l'oxygène contenu dans les emballages métalliques des peintures liquides, des phénomènes de corrosion des boîtes ou des fûts.

Dans le cas de l'application d'une peinture sur un support métallique, comme une tôle d'acier préalablement sablée, on observe un phénomène d'enrouillement rapide de la surface métallique connu sous la dénomination de « flash rusting » qui apparaît lors de l'application d'une peinture primaire antirouille à base d'eau et qui entraîne la formation de traces de rouille qui se marquent particulièrement au travers d'un feuil de teinte blanche ou claire. Bien que ce phénomène n'altère en principe pas l'efficacité de la protection, il empêche d'utiliser des peintures primaires de teinte claire à cause de la coloration de rouille qui apparaît à travers la couche de fond.

Finalement, la réalisation de revêtements, et en particulier de peintures, anti-corrosion fait appel à l'obtention d'un feuil protecteur visant à empêcher la corrosion d'une surface métallique due à l'action oxydante du milieu avec lequel cette surface pourrait être ou est en contact. Cependant les feuils obtenus ne sont jamais totalement imperméables ni à l'air, ni à l'eau et leur rôle de barrière physique se dégrade généralement dans le temps. Pour améliorer leur pouvoir protecteur, il faut donc compléter le rôle de barrière physique par un rôle de barrière chimique, en tentant de consommer l'oxygène lors de sa pénétration dans le feuil. La plupart des substances réductrices auxquelles on pourrait penser pour ce rôle de désoxygénation présentent une série d'inconvénients parmi lesquels on peut citer la lixiviation, c'est-à-dire l'appauvrissement en certains constituants de la peinture par contact du feuil avec l'eau, l'accroissement de la conductivité de l'eau qui pénètre dans le feuil, par suite de la dissociation chimique, ce qui provoque l'augmentation de courants de corrosion, et finalement l'interaction avec d'autres constituants de la peinture pouvant causer une détérioration de qualité.

Certains des pigments anticorrosions actuellement utilisés sont considérés comme toxiques et sont donc à éviter.

Il convient encore de noter qu'on observe actuellement une évolution de la technique allant vers un emploi de plus en plus généralisé de systèmes à base d'eau (peintures en dispersion aqueuse, peintures hydrosolubles) au détriment des systèmes anciens à base de solvants. Ce sont précisément ces systèmes à base d'eau qui présentent certains problèmes spécifiques tels que le flash rusting et la plus grande sensibilité à l'eau de feuil.

Le but visé par la présente invention est d'éviter les inconvénients des procédés et compositions de l'état de la technique qui viennent d'être décrits. D'autres avantages et caractéristiques de la solution proposée par la présente invention apparaîtront également à la lecture du mémoire descriptif qui suit.

La présente invention vise par conséquent à fournir un procédé de désoxygénation de compositions servant au revêtement de surface par les techniques habituelles d'application pour ces revêtements, consistant à incorporer dans lesdites compositions au moins un couple constitué d'au moins une enzyme choisie dans la classe des oxygénases ou des oxydases avec un substrat spécifique ou son précurseur, afin de fixer l'oxygène.

L'invention s'étend également à des compositions destinées à la mise en pratique du procédé mentionné comportant au moins une enzyme.

Relèvent également de l'invention les diverses applications correspondantes pour prévenir les phénomènes de corrosion des emballages métalliques et le « flash rusting » lors de l'application des peintures aqueuses, dans les compositions liquides et pour réaliser des feuils formés servant de revêtements de surface à propriété anti-rouille.

La présente invention trouve une application particulièrement intéressante dans les systèmes en phase aqueuse mais n'y est nullement limitée, la transposition à d'autres systèmes étant parfaitement réalisable.

Dans le présent mémoire descriptif et les revendications qui suivent il sera fait essentiellement référence aux peintures ; il doit être bien entendu cependant que l'invention s'applique de manière générale à tous les types de revêtements similaires tels que les enduits et les vernis. Il convient de noter en particulier que les éléments du couple enzyme et substrat peuvent être contenus dans des préparations liquides séparées qui seront réunies lors de leur application sur un support.

L'invention repose donc sur la désoxygénation par catalyse enzymatique des compositions de revêtements et en particulier des peintures.

Plusieurs types de réactions enzymatiques peuvent être envisagés à cet effet. Elles ont en commun le fait d'oxyder par catalyse enzymatique un substrat organique spécifique au moyen d'oxygène moléculaire. Les enzymes utilisables sont, à titre d'exemple : la glucose oxydase, la lipoxygénase, la glycollate oxydase, la galactose oxydase, l'alcool oxydase, la diamine oxydase et l'aldéhyde oxydase. Les enzymes en provoquant l'oxydation des substrats qui leur sont spécifiques conduisent à l'appauvrissement en oxygène du milieu dans lequel la réaction peut se dérouler.

Il convient de noter que divers brevets mentionnent l'utilisation de substances pouvant être qualifiées sous le terme général d'oxydase pour des usages alimentaires. C'est ainsi que le brevet FR-A-1 460 551 (Miles Lab.) mentionne une technique de préparation de la glucose oxydase purifiée pour enlever le glucose ou l'oxygène de diverses compositions de matières essentiellement alimentaires, par exemple l'enlèvement du glucose des blancs d'œufs ou l'enlèvement d'oxygène d'aliments ou de boissons et le brevet américain US-A-3 005 714 (J.A.D. Cooper) mentionne la préparation de galactose oxydase pure pouvant entre autres servir à enlever le galactose de matières alimentaires. Les deux brevets insistent sur la nécessité de produire des produits très purs et donc spécifiques qui sont utilisés dans des milieux très particuliers qui contiennent le substrat de l'enzyme et ils n'indiquent pas que le couple enzyme et son substrat sont introduits dans le milieu.

La demande de brevet allemand DE-A-1 644 737 (Veb Lack- und Druckfarbenfabrik) concerne la préparation de moyens de passivation appliqués préalablement à la peinture sur du fer ou de l'acier et contenant des liants auto-oxydables.

Des systèmes de passivation catalytiques sont utilisés pour décomposer les peroxydes et, comme catalyseurs, on indique des agents siccatifs ou des substances à effet de catalase. Aucun exemple n'indique ce qui doit être entendu par ce dernier terme. Il apparaît cependant clairement qu'il ne s'agit pas dans ce cas d'ajouter à des peintures des agents fixant l'oxygène constitué par un couple formé par une oxydase et le support correspondant. Aucune indication pratique relative à la mise en œuvre de la technique décrite dans la présente demande ne peut être retirée de ce document. La définition habituelle d'une catalase est une enzyme qui décompose le $H_2O_2$.

Finalement, le brevet US-A-4 045 393 (P. Krevenas et al.) décrit des composés différents de la présente demande pour empêcher le « flash rusting ».

Le caractère inattendu de la présente invention repose sur l'observation que l'activité enzymatique est maintenue dans les milieux tels qu'une peinture liquide, un film de peinture au cours de son séchage et un feuil de peinture formé, alors qu'on aurait pu s'attendre à ce que dans de tels milieux, compte tenu de l'absence pratiquement complète de mobilité de l'enzyme et/ou des particularités chimiques et physiques de ces milieux (viscosité, difficulté de diffusion), aucune réaction pratiquement utilisable ne se produirait.

Pour la mise en pratique du procédé de l'invention on peut envisager différentes techniques d'exécution.

Le couple enzyme-substrat peut être notamment introduit dans la peinture sous diverses formes et, à titre d'exemples, on peut citer :

a) la simple addition d'une quantité déterminée d'enzyme et de substrat à le peinture liquide ;

b) l'addition d'une solution contenant l'enzyme et le substrat à la peinture liquide ;

c) l'addition séparée de l'enzyme ou d'une solution la contenant dans une peinture et l'addition d'un substrat ou d'une solution le contenant dans une autre peinture afin de ne permettre la consommation d'oxygène seulement quand les deux couches de ces peintures seront appliquées sur le même support ;

d) l'addition d'une ou plusieurs enzymes capables de fournir au départ d'un précurseur le substrat nécessaire à la première enzyme, par exemple l'addition de glucose oxydase ou d'une solution la contenant à une peinture à laquelle sera ou est également incorporé un autre couple enzyme-substrat qui fournit le milieu en glucose (amidon + α-amylase, amidon ou dextrine + amyloglucosidase, cellulose + cellulase, amidon et dextrine + α-amylase + amyloglucosidase).

Dans chacun des cas précités, l'enzyme peut être non immobilisée ou immobilisée dans un réseau macromoléculaire (gel de polyacrylamide par exemple, carboxyméthylcellulose) ou avoir subi une microencapsulation.

La formulation précise des compositions correspondantes (peintures, vernis ou enduits) sera bien entendu adaptée à la technique d'application envisagée et bien connue du praticien.

Des combinaisons des diverses variantes opératoires précitées sont possibles dans le cadre de l'invention.

L'invention sera décrite plus en détail, à titre d'illustration, à l'aide de l'exemple qui suit.

Exemple 1

L'activité d'un système enzymatique conforme à l'invention a été étudiée dans des formulations de peintures anti-rouille du commerce avec des enzymes Maxazyme-Gol 1500 (Gist-Brocades).

Des films ont été préparés sous air en ajoutant une solution contenant 5 g de glucose et 0,3 ml de glucose oxydase de qualité technique (l'activité de 0,1 ml d'enzyme = 150 unités Sarret) à 100 g de peinture constituée d'une émulsion de copolymère styrène-acrylate (résine Ercusol A.S. 250 de Bayer) dans l'eau, vendue sous la dénomination Primalo par la Société Libert.

Ces films sont comparés à des films identiques préparés à partir de compositions ne contenant que le glucose.

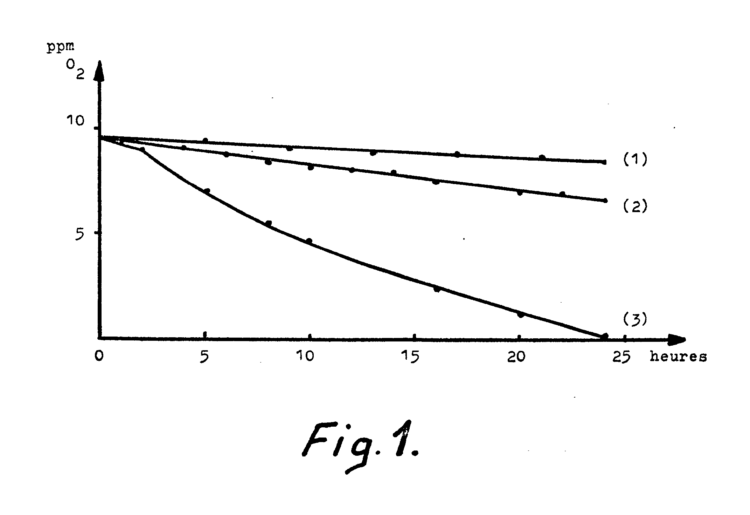

Les films sont appliqués sur une feuille d'étain et séchés à l'air pendant plusieurs jours. Ils sont ensuite introduits sans être détachés du support dans un erlenmeyer rempli d'eau distillée et bouché ; la consommation d'oxygène mesurée en fonction du temps est reprise dans le graphique de la figure 1. La surface du film en contact avec l'eau est bien entendu identique pour chaque échantillon.

La courbe 1 correspond à des films de peinture appliqués en une couche et ne contenant que le glucose. La légère diminution enregistrée doit être attribuée à la dérive de la sonde de mesure ; on a aussi vérifié que le support d'étain n'engendrait aucune consommation d'oxygène.

La courbe 2 est caractéristique d'un film contenant l'enzyme et le glucose. La faculté qu'a ce film de consommer l'oxygène dissous dans la solution est apparente.

La courbe 3 a été obtenue avec un film appliqué à l'air, sur étain, en deux couches : la première couche ne contient que le glucose, la seconde ne contient que l'enzyme. L'eau doit d'abord pénétrer dans la peinture et permettre la diffusion du glucose vers l'extérieur du système avant que la consommation d'oxygène n'ait lieu dans la seconde couche. Cette consommation est donc retardée, ou empêchée, pendant le séchage. La concentration en glucose du film sec reste élevée par rapport à sa concentration initiale et la vitesse de consommation du film sec s'en trouve fortement améliorée. La séparation de l'enzyme et du substrat dans deux couches de peinture permet de réduire l'activité du couple au cours du séchage en préservant le rôle de barrière chimique à l'oxygène du film sec, tandis que dans le cas de la composition correspondant à la courbe 2, l'activité enzymatique qui est intense dans la peinture liquide provoque l'oxydation d'une quantité appréciable du glucose au cours du séchage.

Lors d'une application d'une peinture en dispersion aqueuse du même type que la composition de la courbe 2, de couleur blanche sur acier sablé, on observe dans le cas de l'utilisation du couple enzyme-substrat selon l'invention, l'absence de tout « flash-rusting », tandis qu'en son absence, des taches de rouille étaient nettement visibles. Ce type de système convient donc tout particulièrement pour éviter les phénomènes de corrosion par les peintures liquides.

L'application du système en deux couches dont chacune ne contient qu'un seul des éléments du couple enzyme-substrat peut trouver notamment une application pour la production de peintures anti-corrosion.

## Exemple 2

Cet exemple est destiné à étudier l'activité d'une enzyme dans une dispersion aqueuse d'une résine styrène-acrylate.

Une résine Ercusol AS 250 a été choisie car sa dispersion aqueuse, utilisée par l'industrie pour la fabrication de certaines peintures anticorrosion, permet d'une part une solubilisation aisée du glucose et de l'enzyme et d'autre part permet le dosage de la concentration en $O_2$ dissous au moyen d'une électrode spécifique.

A 100 ml de la dispersion, nous avons ajouté 5 g de glucose puis 0,1 ml de l'enzyme de l'exemple 1. La teneur en $O_2$ qui était initialement de $\pm$ 8 ppm (solution saturée en air) est tombée à moins de 1 ppm après quelques dizaines de minutes. La solution était très faiblement agitée pour permettre une mesure correcte avec la

sonde à $O_2$.

Cette solution a été stockée pendant 8 semaines dans un flacon fermé. On y a ensuite fait barboter de l'$O_2$ jusqu'à l'obtention d'une teneur de 18 ppm. Deux heures après la fin du barbotage, la teneur en $O_2$ dissous était retombée à 3 ppm.

Un second barbotage d'$O_2$ a été effectué dans la même solution pendant plusieurs heures. Une teneur en $O_2$ de 40 ppm a été atteinte (saturation en $O_2$). Au cours de ce barbotage, l'activité enzymatique a provoqué l'oxydation d'une grande quantité du glucose contenu dans la solution. Ceci est prouvé par les deux observations suivantes :

— après avoir bouché le flacon contenant la solution avec la sonde, la diminution de la teneur en $O_2$ a été mesurée en fonction du temps. La consommation d'$O_2$ s'est avérée plus lente qu'à l'issue du premier barbotage puisqu'il a fallu 42 heures pour que la teneur tombe de 40 pm à 13,5 ppm.

— après avoir alors ajouté une nouvelle quantité de substrat (5 g) mais pas d'enzyme, la consommation d'$O_2$ s'est accélérée et la teneur est passée de 13,5 ppm en 24 heures

Ces expériences montrent clairement que l'activité enzymatique est conservée dans cette dispersion contenant l'enzyme et son substrat même après un stockage en récipient fermé à température ambiante.

## Exemple 3

Dans cet exemple, on étudie la consommation d'oxygène par des feuils de peinture commerciale Primalo (voir exemple 1) appliqués à l'air et contenant 5 g de glucose et/ou 0,45 g de glucose oxydase dans 106 ml de peinture.

La peinture est appliquée en deux couches sur une feuille d'étain. Elle est placée après séchage à l'air dans une enceinte fermée où règne une humidité relative de 100 %. Les films ne sont cependant pas en contact avec de l'eau liquide.

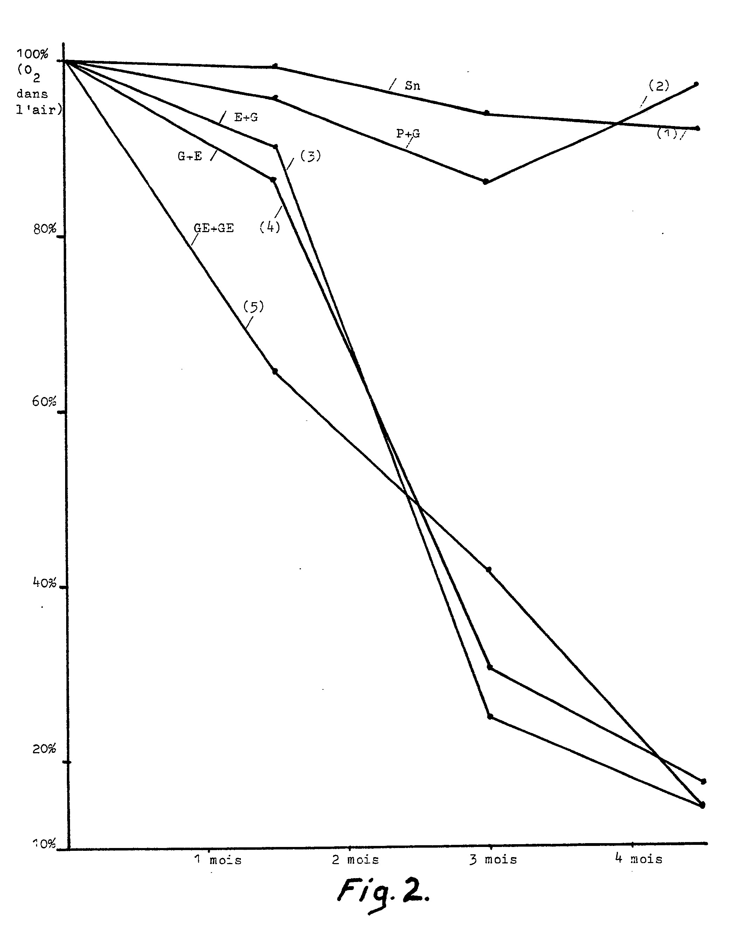

Différents essais ont été effectués et on a reporté dans le graphique de la figure 2 l'évolution des teneurs en oxygène en fonction du temps (la valeur 100 % d'oxygène correspond à la teneur habituelle de l'oxygène dans l'air).

La courbe 1 (Sn) correspond aux valeurs déterminées à blanc (étain sans peinture).

La courbe 2 (P + G) se rapporte à l'application de deux couches de peinture successives contenant chacun la teneur indiquée de glucose mais pas d'enzyme.

La courbe 3 (E + G) se rapporte à deux applications successives d'une peinture Primalo, la première couche contenant la quantité indiquée d'enzyme et la seconde la quantité indiquée de glucose.

La courbe 4 (G + E) se rapporte à une application de peinture comme pour la courbe 3 mais avec inversion des couches (d'abord peinture avec glucose, ensuite peinture avec enzyme).

La courbe 5 (GE + GE) concerne l'application de deux couches successives de peinture de composition identique, chacune d'elles contenant la qualité indiquée de glucose et d'enzyme.

On peut donc conclure que l'activité de la glucose oxydase est maintenue dans une peinture commerciale, en particulier une peinture à base d'eau, tant au cours du stockage qu'après la formation du film et que le couple enzyme-substrat peut réellement être considéré comme un nouvel inhibiteur de corrosion dont les caractéristiques (non dissociabilité et spécificité) sont particulièrement utiles à l'industrie de la peinture.

De plus dans le cas de l'utilisation de glucose + glucose oxydase, il se forme de l'acide gluconique dont le pouvoir séquestrant des métaux est bien connu. Les sous-produits de la réaction de désoxygénation peuvent donc accroître le caractère inhibiteur de corrosion des compositions de l'invention.

Les systèmes inhibiteurs de corrosion de l'invention peuvent donc remplacer totalement ou partiellement les pigments toxiques utilisés jusqu'à présent et améliorer les formulations existantes tant du point de vue des caractéristiques anti-corrosion que du point de vue de l'absence ou de la réduction de la toxicité.

Divers types d'application industrielle sont possibles selon l'invention, à savoir : protection contre la corrosion des emballages métalliques, prévention de la formation de peaux dans les peintures à séchage oxydatif, suppression du flash rusting et enfin, par la consommation de l'oxygène moléculaire traversant un feuil formé, véritable action comme inhibiteur de corrosion, avec comme corrolaire l'amélioration des peintures anti-corrosion.

Bien qu'on ait décrit des modes d'exécution préférés de l'invention et des applications spécifiques possibles, il doit être bien entendu que la présente invention n'y est pas limitée et que de nombreuses variantes restent possibles tout en restant dans le cadre de l'invention. C'est ainsi notamment qu'il relève de l'invention d'ajouter dans une peinture appliquée en couche primaire, un mélange d'enzyme et son substrat spécifique et d'ajouter uniquement ledit substrat dans une peinture appliquée en deuxième couche ou encore d'ajouter le couple enzyme et substrat spécifique dans des couches intermédiaires.

Il convient de noter que le procédé de l'invention et les compositions mises en œuvre ne nécessitent pas le recours à des enzymes de qualité pure. Il est apparu que la qualité dite technique utilisée pour les exemples précités est encore trop pure (et donc trop cher) et qu'il serait possible de recourir à des matières moins épurées. En particulier la présence de catalase au lieu d'être un inconvénient est utile car elle détruit le peroxyde d'hydrogène qui se forme par l'action de la glucose oxydase.

Bien qu'aucun des essais n'ait révélé une sensibilité des peintures contenant glucose et/ou enzyme à un développement de moisissures ou de bactéries, il n'est pas à exclure qu'une addition dans la formulation de la peinture d'agents « antimicrobiens » ou d'autres additifs, puisse être utile dans certains cas.

## Revendications

1. Procédé de désoxygénation catalytique de compositions servant de revêtement protecteur, en particulier des peintures, caractérisé en ce qu'on incorpore dans lesdites compositions au moins un couple constitué d'une enzyme choisie dans la classe des oxygénases avec un substrat correspondant ou son précurseur.

2. Procédé selon la revendication 1, caractérisé en ce que l'enzyme et le substrat sont ajoutés séparément dans lesdites compositions, éventuellement à l'état de solution.

3. Procédé selon la revendication 1, caractérisé en ce que l'enzyme est ajoutée dans une première préparation de peinture et que le substrat est ajouté dans une seconde préparation de peinture de manière que le couple enzyme et substrat n'exerce son effet que lorsque des couches de la première et de la deuxième peinture sont appliquées sur un même support.

4. Procédé selon l'une quelconque des revendications 1 à 3, caractérisé en ce qu'on incorpore dans lesdites compositions une ou plusieurs enzymes capables de fournir au départ d'un précurseur, le substrat nécessaire à une première enzyme.

5. Procédé selon l'une quelconque des revendications 1 à 4, caractérisé en ce que l'enzyme est non immobilisée ou est immobilisée dans un réseau macromoléculaire ou a subi un traitement de microencapsulation.

6. Compositions servant de revêtement protecteur, en particulier peintures, vernis ou enduits, destinées à la mise en pratique du procédé selon l'une quelconque des revendications 1 à 5, caractérisées en ce qu'elles contiennent au moins une enzyme.

7. Compositions servant de revêtement protecteur, en particulier peintures, vernis ou enduits, destinées à la mise en pratique du procédé selon l'une quelconque des revendications 1 à 5, caractérisées en ce qu'elles contiennent un substrat correspondant à ladite enzyme ou un précurseur de ce substrat.

8. Composition selon la revendication 6 ou 7, caractérisées en ce qu'elles contiennent une peinture en mélange avec du glucose et la glucose oxydase.

9. Composition selon l'une quelconque des revendications 6 à 8, caractérisées en ce que la peinture est à base d'une émulsion dans l'eau.

10. Application des compositions selon l'une quelconque des revendications 6 + 9 à la protection contre la corrosion des emballages métalliques.

11. Application des compositions selon l'une quelconque des revendications 6 à 9 à la prévention de la formation de peaux.

12. Application des compositions selon l'une quelconque des revendications 6 à 9 à la suppression de l'enrouillement rapide des surfaces métalliques (flash rusting).

13. Application des compositions selon l'une quelconque des revendications 6 à 9 à la consommation de l'oxygène moléculaire traversant un film sec dans les peintures anti-corrosion.


## Claims

1. Process of catalytic deoxygenation of protective coating compositions, particularly paints, characterized in that at least one couple consisting of an enzyme of the oxygenase type and a corresponding substrate or a precursor thereof is provided in the said compositions.

2. Process according to claim 1, characterized in that the enzyme and the substrate are separately added to the said compositions, possibly as solutions.

3. Process according to claim 1, characterized in that the enzyme is added in a first paint composition and the substrate is added in a second paint composition so that the couple of enzyme and substrate exerts its action only when a layer of the first paint composition and a layer of the second paint composition are applied to the same base.

4. Process according to anyone of the claims 1 to 3, characterized in that one or more enzymes able to provide from a precursor the substrate required by a first enzyme are added to the said compositions.

5. Process according to anyone of the claims 1 to 4, characterized in that the enzyme is not immobilized or is immobilized in a macromolecular network or has been incorporated in microcapsules.

6. Compositions used a protective coating, particularly paints, varnishes or sets, intended for the practice of the process according to anyone of the claims 1 to 5, characterized in that they comprise at least one enzyme.

7. Compositions used a protective coating, particularly paints, varnishes or sets, intended for the practice of the process according to anyone of the claims 1 to 5, characterized in that they comprise a substrate corresponding to said enzyme or a precursor of this substrate.

8. Compositions according to claim 6 or 7, characterized in that they comprise a paint mixed with glucose and glucose oxidase.

9. Compositions according to anyone of the claims 6 to 8, characterized in that the paint is based on an aqueous emulsion.

10. Use of the compositions according to anyone of the claims 6 to 9 for the protection against corrosion of metallic packings.

11. Use of the compositions according to anyone of the claims 6 to 9 to bias against skin formation.

12. Use of the compositions according to anyone of the claims 6 to 9 to suppress flash rusting of metallic surfaces.

13. Use of the compositions according to anyone of the claims 6 to 9 to consume the molecular oxygen which passes through a dry film, in the anti-corrosion paint compositions.


## Ansprüche

1. Verfahren zur katalytischen Deoxydierung von als Schutzschicht dienenden Verbindungen, insbesondere Farben, dadurch gekennzeichnet, daß man wenigstens ein Paar bestehend aus einem Enzym, das aus der Klasse de Oxygenasen gewählt ist, und einem entsprechenden Substrat oder dessen Prekursor in die besagten Verbindungen einbringt.

2. Verfahren nach Anspruch 1, dadurch gekennzeichnet, daß man Enzym und Substrat getrennt, gegebenenfalls als Lösung, in die besagten Verbindungen einbringt.

3. Verfahren nach Anspruch 1, dadurch gekennzeichnet, daß man das Enzym in eine erste Farbverbindung und das Substrat in eine zweite Farbverbindung einbringt, sodaß das Paar Enzym-Substrat seinen Effekt nur ausübt, wenn Schichten der ersten und der zweiten Farbverbindung auf derselben Basis aufgetragen werden.

4. Verfahren nach einem der Ansprüche 1 bis 3, dadurch gekennzeichnet, daß ein oder mehrere Enzyme, die fähig sind von einem Prekursor ausgehend das für ein erstes Enzym benötigte Substrat zu liefern, in die besagten Verbindungen eingebracht werden.

5. Verfahren nach einem der Ansprüche 1 bis 4, dadurch gekennzeichnet, daß das Enzym entweder nicht immobilisiert ist, oder in einem makromolekularen Netz immobilisiert ist, bzw. in Mikrokapseln eingetragen worden ist.

6. Verbindungen, die als Schutzschicht dienen, insbesondere Farbverbindungen, Lacke oder Beschichtungen, zur praktischen Anwendung des Verfahrens nach einem der Ansprüche 1-5, dadurch gekennzeichnet, daß sie wenigstens ein Enzym enthalten.

7. Verbindungen, die als Schutzschicht dienen, insbesondere Farbverbindungen, Lacke oder Beschichtungen, zur praktischen Anwezndung des Verfahrens nach einem der Ansprüche 1-5, dadurch gekennzeichnet, daß sie ein dem Enzym entsprechende Substrat oder einen Prekursor dieses Substrates enthalten.

8. Verbindungen nach Anspruch 6 oder 7, dadurch gekennzeichnet, daß die eine Farbe mit Glukose und Glukose Oxydase vermischt enthalten.

9. Verbindungen nach einem der Ansprüche 6-8, dadurch gekennzeichnet, daß die Farbe auf der Basis einer wässerigen Emulsion besteht.

10. Anwendung der Verbindungen nach einem des Ansprüche 6-9, als Schutz gegen die Korrosion von Metallverpackungen.

11. Anwendung der verbindungen nach einem der Ansprüche 6-9, zur Vorbeugung gegen Hautbildung.

12. Anwendung der Verbindungen nach einem der Ansprüche 6-9, zum Verhindern von schneller Rostbildung auf metallischen Oberflächen (flash rusting).

13. Anwendung der Verbindungen nach einem der Ansprüche 6-9, zum Verbrauch molekularen Sauerstoffs, der einen trockenen Film von Rostschutzfarben durchdringt.

Fig. 1.

Fig. 2.